# EUROPÄISCHE PATENTSCHRIFT

(11) **EP 4 245 731 B1**
(45) Veröffentlichungstag und Bekanntmachung des Hinweises auf die Patenterteilung: **22.05.2024**
(21) Anmeldenummer: 22213105.4
(22) Anmeldetag: 13.12.2022
(51) Int. Cl.: C03B 23/03, C03B 35/20

(54) **GLASFORMSYSTEM UND VERFAHREN ZUR HERSTELLUNG VON ZWEI ODER MEHR GLASPRODUKTEN AUS EINEM GLASROHLING**
GLASS FORMING SYSTEM AND METHOD FOR PRODUCING TWO OR MORE GLASS PRODUCTS FROM A GLASS BLANK
SYSTÈME DE MOULAGE DE VERRE ET PROCÉDÉ DE FABRICATION DE DEUX OU PLUSIEURS PRODUITS EN VERRE À PARTIR D'UNE ÉBAUCHE DE VERRE

(30) Priorität: 23.12.2021 DE 102021134545
(43) Veröffentlichungstag der Anmeldung: 20.09.2023
(73) Patentinhaber: Fraunhofer-Gesellschaft zur Förderung der angewandten Forschung e.V., 80686 München (DE)
(72) Erfinder: VOGEL, Paul-Alexander, 52074 Aachen (DE); STOBL, Christian, 52074 Aachen (DE); KLEBER, Benjamin, 52074 Aachen (DE); VU, Anh Tuan, 52074 Aachen (DE)
(74) Vertreter: Heeschen Pültz Patentanwälte PartGmbB

(56) Entgegenhaltungen:
- CN-A- 108 545 917
- US-A- 4 749 399
- US-A- 5 352 263
- US-A1- 2015 000 340

## Beschreibung

Die Erfindung betrifft ein Glasformsystem zur Herstellung von zwei oder mehr Glasprodukten aus einem Glasrohling, eine Transporteinheit zur Verwendung in einem solchen Glasformsystem sowie ein Verfahren zur Herstellung von zwei oder mehr Glasprodukten aus einem Glasrohling.

Glasformsysteme sind grundsätzlich bekannt. Um Glasprodukte, wie beispielsweise Optiken, durch Heißformgebung herzustellen, werden zunehmend Mehrkavitätenwerkzeuge eingesetzt. Während der Erwärmung des Glasrohlings liegt dieser bereits auf dem unteren Formwerkzeug auf, womit das Formwerkzeug einen signifikanten Anteil seiner Lebensdauer nicht mit der wertschöpfenden Tätigkeit der Umformung eingesetzt wird. Ferner resultiert diese Anordnung in hohen Taktzeiten. Darüber hinaus ist das Formwerkzeug durch die Erwärmung des Rohlings hohen Temperaturschwankungen ausgesetzt. Infolgedessen ist der Werkzeugverschleiß höher und die Werkzeugstandzeit reduziert. Das untere Formwerkzeuge ist in der Regel mit der Glastemperatur gekoppelt, sodass eine individuelle Temperierung des Glasrohlings und des unteren Formwerkzeugs nicht oder lediglich eingeschränkt möglich ist. Ein oberes Formwerkzeug ist hingegen temperierbar, wobei jedoch die richtige Temperierung von Glasrohling, unterem und oberen Formwerkzeug in der Regel lediglich mit einem iterativen Prozess einstellbar ist.

Ein im Stand der Technik häufig eingesetztes Verfahren zur Umgehung der Erwärmung des Glasrohlings auf dem unteren Formwerkzeug besteht darin, den Glasrohling extern vorzuheizen und mittels eines Handhabungsprozesses von der Heizstation zu dem Umformwerkzeug zu bewegen. Die DE102019117756A1 beschreibt beispielsweise eine externe Erwärmung eines Glasrohlings, der anschließend auf stabförmigen Stützelementen einer Formvorrichtung abgelegt wird. Die Handhabung beeinflusst den Glasrohling lokal durch Greifabdrücke. Darüber hinaus kann der Glasrohling während der Handhabung durch Staub und andere Partikel kontaminiert werden.

US5352263 A offenbart ein Verfahren zum Biegen von Glasscheiben, bei dem die Glasscheiben in einem Durchlaufrollenofen auf Biegetemperatur erhitzt und in eine Biegekammer überführt werden, in der sie durch Gasdruck gegen eine oberhalb der Transportebene der Glasscheiben angeordnete konvexe Biegeform angehoben werden werden in ihre endgültige Form gebogen und mit Hilfe eines der endgültigen Form der Glasscheibe entsprechenden Formrings von der Biegekammer an eine nachgeschaltete Kühlstation übergeben.

Ferner ist ein formstabiler Transport des Glasrohlings erforderlich, um den Rohling mit niedriger Viskosität, die durch die hohe Temperatur bedingt ist, unbeschadet handhaben zu können. Die Erhaltung der Form des Glasrohlings ist während des Vorheizens und der Handhabung zur Herstellung qualitativ hochwertiger Glasprodukte erforderlich.

Die externe Vorheizung des Glasrohlings erfordert ferner einen umfangreichen systemischen Aufbau. Insbesondere das Vorsehen einer Handhabungseinheit, die einen sensiblen Greifer zur Reduktion der Greifabdrücke aufweist, ist anfällig für technische Störungen, kostenaufwendig und erfordert eine regelmäßige und in der Regel auch umfangreiche Instandhaltung beziehungsweise Wartung.

Ein weiterer Nachteil des externen Vorheizens besteht darin, dass die Greifabdrücke an dem Glasrohling lediglich bedingt vorhersehbar sind. Insbesondere die komplexen Zusammenhänge zwischen Greifkraft, Temperatur und Glasmaterial führen dazu, dass die Greifabdrücke lediglich statistisch zu bestimmen sind und aufgrund dessen die Qualität der hergestellten Glasprodukte häufig nicht zufriedenstellend ist. Darüber hinaus zeichnet sich der Prozess durch eine geringe Effizienz aus, da die hergestellten Glasprodukte einer umfangreichen Qualitätskontrolle zu unterziehen sind.

Es ist daher eine Aufgabe der vorliegenden Erfindung, ein Glasformsystem und ein Verfahren zur Herstellung von zwei oder mehr Glasprodukten aus einem Glasrohling sowie eine Transporteinheit zur Verwendung in einem solchen Glasformsystem bereitzustellen, die einen oder mehrere der genannten Nachteile vermindern oder beseitigen. Insbesondere ist es eine Aufgabe der Erfindung, eine Lösung bereitzustellen, die eine qualitativ hochwertige Herstellung von Glasprodukten ermöglicht. Ferner ist es eine Aufgabe der Erfindung, eine Lösung bereitzustellen, die die Bereitstellung eines Glasrohlings ohne Greifabdrücke ermöglicht.

Diese Aufgabe wird gelöst mit einem Glasformsystem, einer Transporteinheit und einem Verfahren nach den Merkmalen der unabhängigen Patentansprüche. Weitere vorteilhafte Ausgestaltungen dieser Aspekte sind in den jeweiligen abhängigen Patentansprüchen angegeben. Die in den Patentansprüchen und der Beschreibung einzeln aufgeführten Merkmale sind in beliebiger, technologisch sinnvoller Weise miteinander kombinierbar, wobei weitere Ausführungsvarianten der Erfindung aufgezeigt werden.

Gemäß einem ersten Aspekt wird die eingangs genannte Aufgabe gelöst durch ein Glasformsystem zur Herstellung von zwei oder mehr Glasprodukten aus einem Glasrohling, umfassend eine Transporteinheit zum Transportieren des Glasrohlings, die eine Gitterstruktur mit zwei oder mehr Prozessaussparungen aufweist, wobei die Gitterstruktur angeordnet und ausgebildet ist, den Glasrohling vertikal über den Prozessaussparungen zu halten, eine Umformvorrichtung mit zwei oder mehr Umformeinheiten, die jeweils ein oberes Umformelement und ein unteres Umformelement aufweisen, die jeweils eine Kavität zum Umformen des Glasrohlings ausbilden, wobei die Transporteinheit derart an der Umformvorrichtung anordenbar ist, dass die Umformeinheiten jeweils durch eine der Prozessaussparungen hindurchbewegbar sind, um einen von der Gitterstruktur gehaltenen Glasrohling in den Kavitäten zu verpressen.

Der Erfindung liegt unter anderem die Erkenntnis zugrunde, dass der Greifvorgang vermieden werden kann, wenn der Glasrohling auf der Transporteinheit zunächst mit einer Temperiervorrichtung aufgeheizt und der Glasrohling mit der Transporteinheit anschließend in die Umformvorrichtung eingesetzt wird.

Infolgedessen ist kein Greifen des Glasrohlings zur Bewegung von der Temperiervorrichtung zu der Umformvorrichtung erforderlich, sondern lediglich ein Umsetzen der Transporteinheit, wodurch keine Greifabdrücke an dem Glasrohling verursacht werden. Das Umsetzen der Transporteinheit erfolgt vorzugsweise mit einem temperierten Greifer,

Ein weiterer Vorteil der im bestimmungsgemäßen Betrieb üblicherweise auf 400 °C bis 700 °C erwärmten Transporteinheit besteht darin, dass die Form des Glasrohlings im Wesentlichen erhalten bleibt und kein Durchhängen des erwärmten Glasrohlings zu erwarten ist.

Der Erfindung liegt ferner die Erkenntnis zugrunde, dass die Transporteinheit derart an der Umformvorrichtung anzuordnen ist, dass die Umformung im Wesentlichen nicht durch die Transporteinheit beeinflusst wird. Dies wird vorliegend dadurch erreicht, dass sich die Umformeinheiten, insbesondere die unteren Umformelemente der Umformeinheiten durch die Prozessaussparungen der Gitterstruktur hindurchbewegen können. In anderen Worten kann die Transporteinheit in der Umformvorrichtung versenkt werden, sodass die Umformvorrichtung den Umformvorgang vornehmen kann.

Das Glasformsystem ist zur Herstellung von zwei oder mehr Glasprodukten aus dem Glasrohling ausgebildet. Aus einem Glasrohling bedeutet insbesondere aus mindestens einen Glasrohling, da auf der Transporteinheit auch zwei oder mehr Glasrohlinge nebeneinander anordenbar und entsprechend erwärmbar, transportierbar und verpressbar sind. Die Glasprodukte können beispielsweise Wafer sein.

Das Glasformsystem umfasst die Transporteinheit. Die Transporteinheit ist zum Transportieren des Glasrohlings ausgebildet, insbesondere von einer Temperiervorrichtung zu der Umformvorrichtung. Die Transporteinheit umfasst die Gitterstruktur. Die Gitterstruktur weist zwei oder mehr Prozessaussparungen auf.

Die Gitterstruktur umfasst vorzugsweise zwei oder mehr Gitterstreben, die derart ausgerichtet sind, dass die Prozessaussparungen ausgebildet werden. Die Gitterstreben sind vorzugsweise parallel und/oder orthogonal zueinander ausgerichtet. Beispielsweise bilden zwei orthogonal zueinander ausgerichtete Gitterstreben insgesamt vier Prozessaussparungen aus. Die Prozessaussparungen weisen vorzugsweise einen rechteckigen, ferner vorzugsweise einen quadratischen Öffnungsquerschnitt auf. Ferner vorzugsweise weisen die Prozessaussparungen einen wabenförmigen Öffnungsquerschnitt auf.

Es ist darüber hinaus bevorzugt, dass die Gitterstruktur einen Gitterstrukturrahmen aufweist, der die Gitterstreben umgibt. Die Gitterstruktur kann auch derart ausgebildet werden, dass durch eine Prozessaussparung zwei Umformeinheit hindurchbewegbar sind.

Die Umformvorrichtung weist die zwei oder mehr Umformeinheiten auf. Eine Umformeinheit weist ein oberes Umformelement und ein unteres Umformelement auf. Die oberen Umformelemente sind vorzugsweise an einer oberen Umformvorrichtung der Umformvorrichtung ausgebildet. Ferner vorzugsweise sind die unteren Umformelemente an einer unteren Umformvorrichtung der Umformvorrichtung angeordnet. Die obere Umformvorrichtung und/oder die untere Umformvorrichtung kann beziehungsweise können einstückig, insbesondere monolithisch, oder mehrteilig ausgebildet sein.

Ein oberes Umformelement und ein korrespondierendes unteres Umformelement sind derart ausgebildet, dass diese eine Kavität ausbilden. Hierfür weist das obere Umformelement in einem dem unteren Umformelement zugewandten Abschnitt und/oder das untere Umformelement in einem dem oberen Umformelement zugewandten Abschnitt vorzugsweise einen konkaven Bereich auf.

Die Umformeinheiten sind vorzugsweise nebeneinander angeordnet. Die Umformeinheiten können beispielsweise in einer Linie oder in einer Matrix angeordnet sein. Üblicherweise ist der Glasrohling auf den unteren Umformelementen der Umformeinheiten anzuordnen.

Um die Anordnung des Glasrohlings zwischen dem oberen Umformelement und dem unteren Umformelement zu ermöglichen, ist vorgesehen, dass die Transporteinheit derart an der Umformvorrichtung anordenbar ist, dass die Umformeinheiten jeweils durch eine der Prozessaussparungen hindurchbewegbar sind, um einen von der Gitterstruktur gehaltenen Glasrohling in den Kavitäten zu verpressen. Die Transporteinheit wird mit dem Glasrohling somit an der Umformvorrichtung angeordnet, sodass die Umformeinheiten, beispielsweise die unteren Umformelemente der unteren Umformeinheiten, durch die Prozessaussparungen hindurchbewegt werden können. Durch das Hindurchbewegen wird der Glasrohling von der Gitterstruktur an die unteren Umformelemente übergeben. Anschließend kann eine Verpressung des Glasrohlings in den Kavitäten erfolgen.

Die Transporteinheit hat vorzugsweise keinen Einfluss auf das Verpressen. Alternativ kann die Transporteinheit derart ausgebildet und anordenbar sein, dass diese einen vordefinierten Einfluss auf das Verpressen hat. Dies kann beispielsweise durch eine Kontaktierung des Glases des Glasrohlings während des Verpressens mit der Transporteinheit bewirkt werden. Ferner ist es bevorzugt, dass sich Spaltmaße zwischen der Transporteinheit und den Umformeinheiten einstellen. Alternativ kann auch das obere Umformelement durch die Prozessaussparungen hindurchbewegt werden.

Dass der von der Gitterstruktur gehaltene Glasrohling in den Kavitäten verpresst wird, bedeutet auch, dass ein Teil des Glasrohlings verpresst wird. In der Regel wird ein Teil des Glasrohlings in Abschnitten zwischen zwei Umformeinheiten nicht im eigentlichen Sinne verpresst. Die Transporteinheit wird also derart an der Umformvorrichtung angeordnet, dass der von der Gitterstruktur gehaltene Glasrohling in den Kavitäten verpresst wird, währenddessen die Transporteinheit an der Umformvorrichtung angeordnet ist. Ein Entfernen der Transporteinheit vor dem Verpressen ist nicht erforderlich.

Eine bevorzugte Ausführungsvariante des Glasformsystems zeichnet sich dadurch aus, dass die Transporteinheit zum Transport des Glasrohlings zwischen der Umformvorrichtung und einer Temperiervorrichtung ausgebildet ist. Hierfür weist die Transporteinheit insbesondere ein Material auf, das während des Vorheizens des Glasrohlings in der Temperiervorrichtung im Wesentlichen keine chemische Verbindung mit dem Glas eingeht und im Wesentlichen formstabil bei hohen Temperaturen ist.

Ferner vorzugsweise weist die Transporteinheit mindestens einen Handhabungsabschnitt auf, der angeordnet und ausgebildet ist, mit einem Transportmittel zusammenzuwirken. Vorzugsweise ist der Handhabungsabschnitt als flächige Auskragung ausgebildet.

Eine bevorzugte Fortbildung des Glasformsystems zeichnet sich dadurch aus, dass die Gitterstruktur durch Gitterstreben ausgebildet wird. Die Gitterstreben sind vorzugsweise parallel und/oder orthogonal zueinander ausgerichtet. Die Gitterstreben sind ferner vorzugsweise einstückig ausgebildet. Alternativ oder ergänzend kann die Gitterstruktur durch mindestens einen Draht ausgebildet werden oder diesen umfassen. Die Gitterstruktur kann auch durch zwei oder mehr Drähte ausgebildet werden. Es ist bevorzugt, dass die Transporteinheit einen, zwei oder mehrere Zapfen zur Befestigung und/oder zur Umlenkung des Drahtes aufweist. Der bzw. die Zapfen können beispielsweise von einer Unterseite der Transporteinheit auskragen.

Eine weitere bevorzugte Ausführungsvariante des Glasformsystems zeichnet sich dadurch aus, dass die Gitterstruktur mindestens ein Auflageelement aufweist, sodass ein Glasrohling auf dem mindestens einen Auflageelement abstützbar ist. Vorzugsweise umfasst die Gitterstruktur eine Vielzahl an Auflageelementen, die ferner vorzugsweise gleichmäßig verteilt sind. Beispielsweise können die Auflageelemente von den Gitterstreben umfasst sein. Vorzugsweise ist jede Prozessaussparung von mindestens drei, vorzugsweise vier, Auflageelementen umgeben, um eine vorteilhafte Abstützung des Glasrohlings zu ermöglichen. Somit wird die Auflagefläche des Glasrohlings auf der Transporteinheit reduziert, sodass die Qualität weiter verbessert wird.

Es ist bevorzugt, dass das mindestens eine Auflageelement austauschbar angeordnet ist. Durch die regelmäßige Erwärmung und den Kontakt mit dem erwärmten Glasrohling ist das mindestens eine Auflageelement Belastungen ausgesetzt, die einen Verschleiß bewirken.

Eine bevorzugte Fortbildung des Glasformsystems zeichnet sich dadurch aus, dass die Umformvorrichtung einen die zwei oder mehr Umformeinheiten jeweils umgebenden Vertiefungsbereich aufweist und die Gitterstruktur zumindest abschnittsweise derart in dem Vertiefungsbereich versenkbar ist, dass die Kavitäten vollständig schließbar sind.

Sobald die Umformeinheiten durch die Prozessaussparungen hindurchbewegt werden, kann die Gitterstruktur beispielsweise in den Vertiefungsbereich bewegt werden, sodass diese den Pressvorgang im Wesentlichen nicht beeinträchtigt. Der Vertiefungsbereich kann beispielsweise ein, zwei oder mehrere Vertiefungskanäle zwischen den Umformeinheiten aufweisen. Es ist insbesondere bevorzugt, dass der Vertiefungsbereich eine zu der Gitterstruktur und/oder zu der Transporteinheit korrespondierende Geometrie aufweist, sodass die Gitterstreben der Gitterstruktur in den Vertiefungskanälen des Vertiefungsbereichs angeordnet werden können.

In einer weiteren bevorzugten Fortbildung des Glasformsystems ist vorgesehen, dass die unteren Umformelemente einen unteren pyramidenstumpfförmigen Abschnitt und/oder die oberen Umformelemente einen oberen pyramidenstumpfförmigen Abschnitt aufweisen, sodass einen Glasfluss beeinflussende Glasflusshohlräume benachbart zu den Kavitäten bei einem Schließen der Kavitäten ausgebildet werden.

Wenn die oberen und die unteren Umformelemente jeweils einen pyramidenstumpfförmigen Abschnitt aufweisen, können die Glasflusshohlräume beispielsweise einen hexagonalen Querschnitt aufweisen. Ferner kann der Glasflusshohlraum einen rautenförmigen Querschnitt aufweisen. Mit den Glasflusshohlräumen wird der Glasfluss beeinflusst, sodass die Herstellung der Glasprodukte verbessert werden kann. Insbesondere durch ein Einstellen der Winkel der pyramidenstumpfförmigen Abschnitte kann die Reibung des Glases an der Umformeinheit eingestellt werden.

Es ist bevorzugt, dass eine untere Grenze dieses Winkels zwischen 20 - 30° gegenüber einer Horizontalen und eine obere Grenze dieses Winkels zwischen 60 - 70° gegenüber der Horizontalen gewählt ist. Die pyramidenstumpfförmigen Abschnitte können ferner Freiformflächen aufweisen, die einer Pyramidenform angenähert sind. Dies kann beispielsweise mit einem sphärischen, asphärischen oder polynomförmigen Abschnitt ausgebildet werden.

Eine weitere bevorzugte Ausführungsvariante des Glasformsystems zeichnet sich dadurch aus, dass zwischen den oberen pyramidenstumpfförmigen Abschnitten ein konvex ausgebildetes Glasflusselement angeordnet ist, das bei dem Schließen der Kavitäten in einen der Glasflusshohlräume hineinragt. Das Glasflusselement kann beispielsweise einen pyramidenförmigen oder einen kegelförmigen Querschnitt aufweisen, wobei die Spitze der Pyramide im bestimmungsgemäßen Betrieb nach unten ausgerichtet ist. Mit einem derartigen Glasflusselement kann der Glasfluss in dem Glasflusshohlraum weiter beeinflusst werden.

In einer weiteren bevorzugten Ausführungsvariante des Glasformsystems ist vorgesehen, dass die unteren Umformelemente jeweils einen unteren quaderförmigen Abschnitt aufweisen und die quaderförmigen Abschnitte eine Seite des Vertiefungsbereichs, insbesondere eine Seite des und/oder der Vertiefungskanäle, ausbilden. Unter einem quaderförmigen Abschnitt kann auch ein würfelförmiger Abschnitt verstanden werden. Die quaderförmigen Abschnitte sind vorzugsweise jeweils vertikal unter den pyramidenstumpfförmigen Abschnitten angeordnet. Infolgedessen verlaufen die unteren Umformelemente vorzugsweise zunächst vertikal gerade nach oben und laufen aufgrund der pyramidenstumpfförmigen Abschnitte anschließend verjüngend zu der Kavität zu.

Eine weitere bevorzugte Ausführungsvariante des Glasformsystems umfasst zwei oder mehr, vorzugsweise vier Positionierungselemente zur Positionierung des Glasrohlings in einer vorbestimmten Position an der Gitterstruktur.

Vorzugsweise sind vier Fixierungselemente jeweils in einer inneren, der Gitterstruktur zugewandten Ecke der Transporteinheit vorgesehen. Alternativ oder ergänzend sind vorzugsweise vier Fixierungselemente jeweils an einer Seite der Gitterstruktur und/oder einer inneren Seite der Transporteinheit vorgesehen. Die Fixierungselemente weisen vorzugsweise einen nach oben hin verjüngenden Querschnitt auf, sodass die Beabstandung zwischen zwei sich gegenüberliegend angeordneten Fixierungselementen nach unten hin abnimmt.

Eine weitere bevorzugte Ausführungsvariante des Glasformsystems zeichnet sich dadurch aus, dass dieses ein die Transporteinheit relativ zu der Umformvorrichtung zentrierendes Zentrierungsmittel umfasst. Es ist bevorzugt, dass der Vertiefungsbereich das Zentrierungsmittel aufweist und das Zentrierungsmittel ausgebildet ist, die Transporteinheit mittels eines Positionierungsabschnitts zu positionieren. Beispielsweise kann der Vertiefungsbereich beziehungsweise die Vertiefungskanäle verjüngend ausgebildet werden, sodass mittels einer engen Tolerierung eine Positionierung der Transporteinheit innerhalb des Vertiefungsbereichs beziehungsweise innerhalb der Vertiefungskanäle bewirkt wird.

Eine weitere bevorzugte Ausführungsvariante des Glasformsystems zeichnet sich dadurch aus, dass die Umformvorrichtung und die Transporteinheit jeweils mindestens eine korrespondierende Ausrichtöffnung aufweisen, die im bestimmungsgemäßen Betrieb eine gemeinsame Durchtrittsachse aufweisen und derart angeordnet sind, dass die Umformvorrichtung und die Transporteinheit mittels der Ausrichtöffnung und einem in der Ausrichtöffnung anordenbaren Ausrichtelement ausrichtbar sind.

Eine weitere bevorzugte Ausführungsvariante des Glasformsystems zeichnet sich dadurch aus, dass die Transporteinheit einen die Gitterstruktur umgebenden Kragen aufweist. Der Kragen kann beispielsweise den Gitterstrukturrahmen umgeben. Der Kragen ist insbesondere derart angeordnet, dass dieser im bestimmungsgemäßen Betrieb beim Zusammenfahren der Umformeinheiten außerhalb der Umformvorrichtung angeordnet ist.

Eine weitere bevorzugte Ausführungsvariante des Glasformsystems zeichnet sich dadurch aus, dass die Gitterstruktur ein Kühlsystem aufweist, das angeordnet und ausgebildet ist, die Gitterstruktur zu kühlen. Es ist insbesondere bevorzugt, dass das Kühlsystem innerhalb von den Gitterstreben der Gitterstruktur eingebettete Kühlkanäle umfasst, die von einem Kühlfluid durchströmbar sind.

Gemäß einem weiteren Aspekt wird die eingangs genannte Aufgabe gelöst durch eine Transporteinheit zur Verwendung in einem Glasformsystem nach einer der im Vorherigen genannten Ausführungsvarianten, die zum Transportieren eines Glasrohlings ausgebildet ist, umfassend eine Gitterstruktur mit zwei oder mehr Prozessaussparungen, wobei die Gitterstruktur angeordnet und ausgebildet ist, den Glasrohling vertikal über den Prozessaussparungen zu halten. Die im Vorherigen genannten Merkmale, Eigenschaften und Vorteile der Transporteinheit des Glasformsystems gemäß dem ersten Aspekt gelten analog für die Transporteinheit gemäß diesem Aspekt.

Gemäß einem weiteren Aspekt wird die eingangs genannte Aufgabe gelöst durch ein Verfahren zur Herstellung von zwei oder mehr Glasprodukten aus einem Glasrohling, insbesondere mit einem Glasformsystem nach einer der im Vorherigen beschriebenen Ausführungsvarianten, umfassend die Schritte: Erwärmen eines vertikal über Prozessaussparungen einer Gitterstruktur einer Transporteinheit gehaltenen Glasrohlings mittels einer Heizeinheit; Bewegen der Transporteinheit von der Heizeinheit zu einer Umformvorrichtung mit zwei oder mehr Umformeinheiten, die jeweils ein oberes Umformelement und ein unteres Umformelement aufweisen, die jeweils eine Kavität zum Umformen des Glasrohlings ausbilden; und Bewegen der oberen Umformelemente und/oder der unteren Umformelemente durch die Prozessaussparungen aufeinander zu, um den von der Gitterstruktur gehaltenen Glasrohling in den Kavitäten zu verpressen.

Das Bewegen der Transporteinheit von der Heizeinheit zu der Umformvorrichtung umfasst insbesondere auch ein entsprechendes Anordnen der Transporteinheit an der Umformvorrichtung. Dieses Anordnen kann beispielsweise ein Anordnen der Gitterstruktur in einem Vertiefungsbereich, insbesondere in Vertiefungskanälen, umfassen.

Nachdem der Glasrohling in den Kavitäten verpresst wurde, wird der verpresste Glasrohling mit der Transporteinheit aus der Umformvorrichtung entnommen. Anschließend kann der Glasrohling mit der Transporteinheit zu einer Kühlstation bewegt werden, die beispielsweise einen Kühlofen aufweist.

Das Verfahren und seine möglichen Fortbildungen weisen Merkmale beziehungsweise Verfahrensschritte auf, die sie insbesondere dafür geeignet machen, für das Glasformsystem und seine Fortbildungen verwendet zu werden. Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Glasformsystems verwiesen.

Bevorzugte Ausführungsbeispiele werden exemplarisch anhand der beiliegenden Figuren erläutert. Es zeigen:
- Figur 1:: eine schematische, zweidimensionale Querschnittsansicht einer beispielhaften Ausführungsform eines Glasformsystems;
- Figur 2:: eine schematische, dreidimensionale Ansicht des in Figur 1 gezeigten Glasformsystems;
- Figur 3:: eine schematische, dreidimensionale Ansicht einer beispielhaften Ausführungsform einer Transporteinheit;
- Figur 4:: eine schematische, zweidimensionale Draufsicht auf die in Figur 3 gezeigte Transporteinheit;
- Figur 5:: eine schematische, dreidimensionale Detailansicht der in Figur 3 gezeigten Transporteinheit;
- Figur 6:: eine schematische, zweidimensionale Ansicht der in Figur 3 gezeigten Transporteinheit; und
- Figur 7:: eine schematische Ansicht eines Verfahrens.

In den Figuren sind gleiche oder im Wesentlichen funktionsgleiche beziehungsweise -ähnliche Elemente mit den gleichen Bezugszeichen bezeichnet.

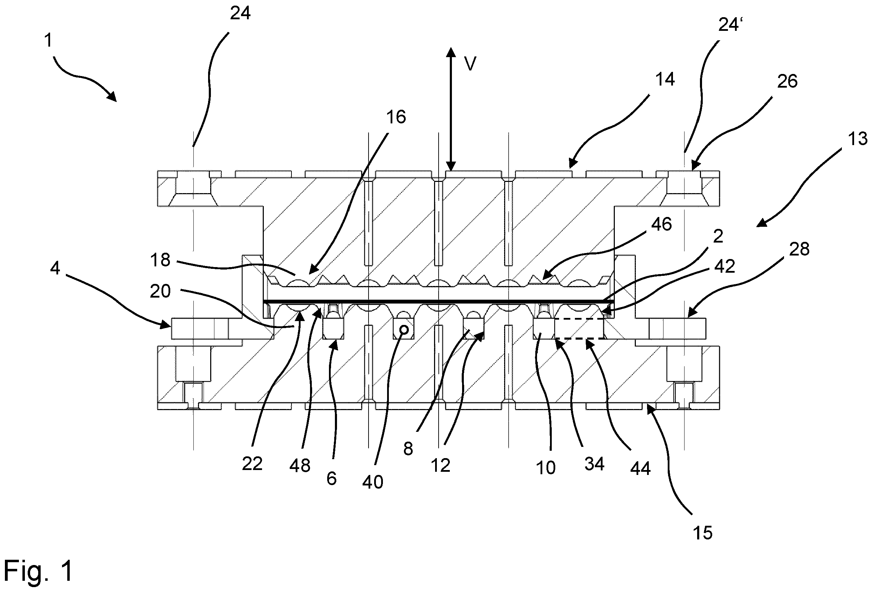

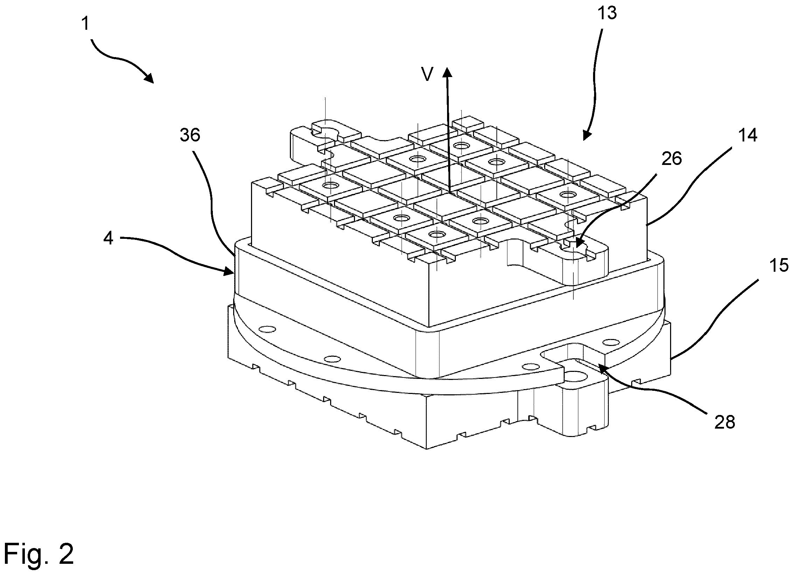

Die Figuren 1 und 2 zeigen ein Glasformsystem 1 zur Herstellung von 25 Glasprodukten aus einem Glasrohling 2. Hierfür umfasst das Glasformsystem 1 eine Transporteinheit 4, die durch eine geschickte Ausbildung an einer Umformvorrichtung 13 anordenbar ist. Die Umformvorrichtung 13 verpresst den Glasrohling 2 in den Kavitäten 22, währenddessen die Transporteinheit 4 an der Umformvorrichtung 13 angeordnet ist.

Die Umformvorrichtung 13 umfasst eine obere Umformvorrichtung 14 und eine untere Umformvorrichtung 15. Die Umformvorrichtung 13 umfasst insgesamt 25 Umformeinheiten 16. Jede Umformeinheit 16 umfasst ein oberes Umformelement 18 und ein unteres Umformelement 20, die jeweils eine Kavität 22 ausbilden. Zwischen den Umformeinheiten 16 ist der Vertiefungsbereich 34 vorgesehen. Der Vertiefungsbereich 34 ist durch Vertiefungskanäle ausgebildet. Die Vertiefungskanäle werden unter anderem durch quaderförmige Abschnitte 44 der unteren Umformelemente 20 ausgebildet. Vertikal benachbart zu dem quaderförmigen Abschnitt 44 eines jeden unteren Umformelements 20 ist ein pyramidenstumpfförmiger Abschnitt 42 vorgesehen, der einen Teil der Kavität 22 und einen Glasflusshohlraum 48 ausbildet.

Die Transporteinheit 4 weist eine Gitterstruktur 6 mit Gitterstreben 8, 10 auf. Die Gitterstreben 8, 10 sind jeweils in dem Vertiefungsbereich 34 anordenbar. Durch das Anordnen der Gitterstruktur 6 in dem Vertiefungsbereich 34 können die Umformeinheiten 16 jeweils durch eine der Prozessaussparungen 12 hindurchbewegt werden. Somit ist es in vorteilhafter Weise möglich, dass der von der Gitterstruktur 6 gehaltene Glasrohling 2 in den Kavitäten 22 verpresst wird.

Im bestimmungsgemäßen Betrieb ist die Umformvorrichtung 13 vor einer Verpressung eines Glasrohlings 2 geöffnet, das bedeutet insbesondere, dass die obere Umformvorrichtung 14 von der unteren Umformvorrichtung 15 beabstandet ist. In diesem Zustand wird der Glasrohling 2 mit der Transporteinheit 4 von einer Temperiervorrichtung hin zu dem Glasformsystem 1 bewegt. Dort wird die Transporteinheit 4 derart an der unteren Umformvorrichtung 15 angeordnet, dass die Gitterstruktur 6 in den Vertiefungsbereich 34 bewegt wird. Durch diese Bewegung treten die unteren Umformelemente 20 der Umformeinheiten 16 durch die Prozessaussparungen 12 hindurch. Aufgrund dessen wird der Glasrohling 2 von der Gitterstruktur 6 an die unteren Umformelemente 20 übergeben. Dieser Zustand ist in der Figur 1 gezeigt. Anschließend bewegen sich die oberen und unteren Umformelemente 18, 20 in vertikaler Richtung V aufeinander zu, sodass der Glasrohling 2 in den Kavitäten verpresst wird.

Die Glasbauteile werden anschließend mit einem Vakuumgreifer oder einem Vakuummechanismus an der oberen Umformvorrichtung 14 entnommen. Ferner können die Glasbauteile aus der Transporteinheit 4 herausgedrückt wird, insbesondere vertikal nach oben.

Es ist insbesondere in Figur 1 gezeigt, dass die Gitterstruktur 6 innerhalb des Vertiefungsbereichs 34 angeordnet ist. Ein Kragen 36 der Transporteinheit 4 ist währenddessen außerhalb des Umformbereichs angeordnet. Der Kragen 36 resultiert in einer Wärmeabschattung. Ferner umfasst die Transporteinheit 4 eine Ausrichtöffnung 28. Darüber hinaus weist die Umformvorrichtung 13 Ausrichtöffnungen 26, 28 auf. Die Ausrichtöffnungen 26, 28 einer Seite weisen eine gemeinsame Bewegungsachse 24, 24' auf. Somit können die unterschiedlichen Komponenten des Glasformsystems 1 zueinander ausgerichtet bewegt werden.

Die Gitterstruktur 6 weist neben den Gitterstreben 8, 10 ein Kühlsystem auf, das unter anderem durch in der Gitterstruktur 6 eingebettete Kühlkanäle 40 ausgebildet wird. Durch die Kühlkanäle 40 kann ein Kühlfluid durchströmen.

Durch die pyramidenstumpfförmigen Abschnitte 42 der Umformeinheiten 16 werden Glasflusshohlräume 48 ausgebildet. Die Glasflusshohlräume 48 verbessern den Glasfluss. In die Glasflusshohlräume 48 können Glasflusselemente 46 hineinragen, um den Glasfluss weiter zu verbessern.

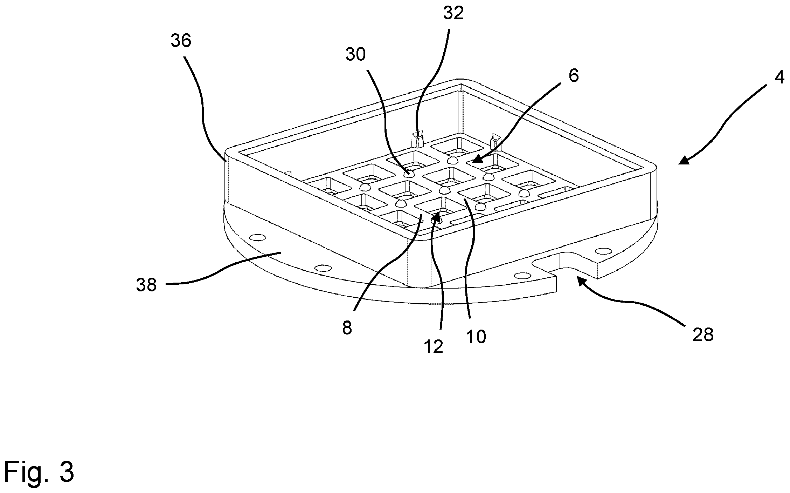

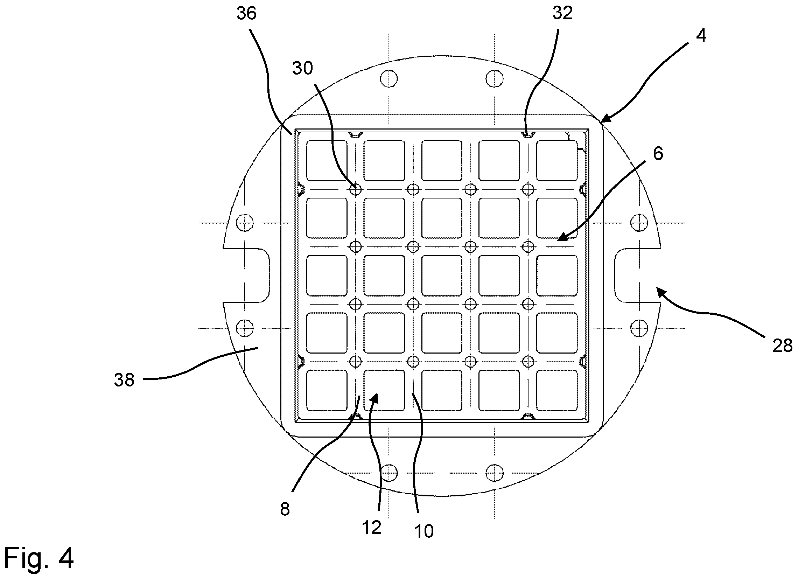

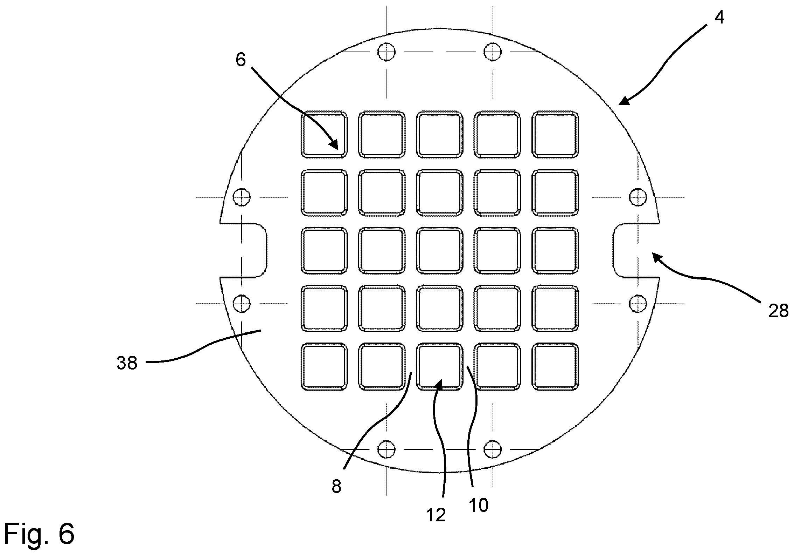

Die in den Figuren 3 - 6 gezeigte Transporteinheit 4 umfasst neben der Gitterstruktur 6 und dem Kragen 36 einen Handhabungsabschnitt 38. Der Handhabungsabschnitt 38 ist an vier Seiten der Transporteinheit 4 vorgesehen. Der Handhabungsabschnitt 38 ermöglicht ein vorteilhaftes Bewegen der Transporteinheit 4 von einer Temperiervorrichtung zu der Umformvorrichtung 13.

Die Gitterstruktur 6 weist darüber hinaus eine Vielzahl an Auflageelementen 30 auf. Mit den Auflageelementen 30 wird die Auflagefläche zwischen dem Glasrohling 2 und der Gitterstruktur 6 reduziert. Die Auflageelemente 30 sind vorzugsweise austauschbar angeordnet. Es ist darüber hinaus gezeigt, dass durch die Gitterstruktur 6 eine Vielzahl an Prozessaussparungen 12 ausgebildet werden.

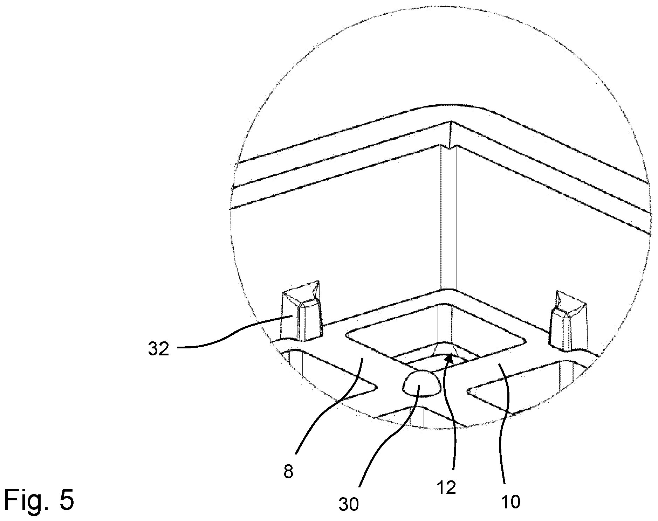

An den Seiten der Gitterstruktur 6, die von einem Gitterstrukturrahmen umgeben ist, sind ferner Positionierungselemente 32 angeordnet. Mit den Positionierungselementen 32 wird der Glasrohling 2 in einer vorbestimmten Position an der Gitterstruktur 6 positioniert. Insbesondere in Figur 5 ist gezeigt, dass die Positionierungselemente 32 einen nach oben hin verjüngenden Abschnitt aufweisen, sodass die Positionierung des Glasrohlings 2 verbessert wird.

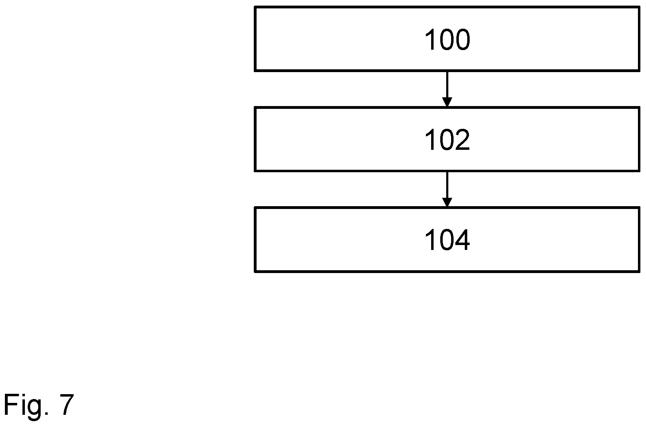

Figur 7 zeigt eine schematische Ansicht eines Verfahrens zur Herstellung von zwei oder mehr Glasprodukten aus einem Glasrohling 2. Das Verfahren umfasst ein Erwärmen 100 eines vertikal über den Prozessaussparungen 12 der Gitterstruktur 6 der Transporteinheit 4 gehaltenen Glasrohlings 2 mittels einer Heizeinheit. Ferner umfasst das Verfahren ein Bewegen 102 der Transporteinheit 4 von der Heizeinheit zu der Umformvorrichtung 13 mit zwei oder mehr Umformeinheiten 16, die jeweils ein oberes Umformelement 18 und ein unteres Umformelement 20 aufweisen, die jeweils eine Kavität 22 zum Umformen des Glasrohlings 2 ausbilden.

Darüber hinaus umfasst das Verfahren ein Bewegen 104 der oberen Umformelemente 18 und/oder der unteren Umformelemente 20 durch die Prozessaussparungen 12 aufeinander zu, um den von der Gitterstruktur 6 gehaltenen Glasrohling 2 in den Kavitäten 22 zu verpressen.

Das im Vorherigen beschriebene Glasformsystem 1 sowie die Transporteinheit 4 und das entsprechende Verfahren ermöglichen eine qualitativ hochwertige Herstellung von Glasprodukten, da der den Glasprodukten zugrunde liegende Glasrohling 2 im Wesentlichen keine Abdruckstellen aufweist. Darüber hinaus ist das Verfahren effizient, da kein sensitiver Greifvorgang erforderlich ist.

### BEZUGSZEICHEN

- 1: Glasformsystem
- 2: Glasrohling
- 4: Transporteinheit
- 6: Gitterstruktur
- 8: Gitterstrebe
- 10: Gitterstrebe
- 12: Prozessaussparung
- 13: Umformvorrichtung
- 14: obere Umformvorrichtung
- 15: untere Umformvorrichtung
- 16: Umformeinheit
- 18: oberes Umformelement
- 20: unteres Umformelement
- 22: Kavität
- 24, 24': Bewegungsachse
- 26: Ausrichtöffnung
- 28: Ausrichtöffnung
- 30: Auflageelemente
- 32: Positionierungselement
- 34: Vertiefungsbereich
- 36: Kragen
- 38: Handhabungsabschnitt
- 40: Kühlkanal
- 42: pyramidenstumpfförmiger Abschnitt
- 44: quaderförmiger Abschnitt
- 46: Glasflusselement
- 48: Glasflusshohlräume
- V: Vertikalrichtung

## Patentansprüche

1. Glasformsystem (1) zur Herstellung von zwei oder mehr Glasprodukten aus einem Glasrohling (2), umfassend
- eine Transporteinheit (4) zum Transportieren des Glasrohlings (2), die eine Gitterstruktur (6) mit zwei oder mehr Prozessaussparungen (12) aufweist, wobei die Gitterstruktur (6) angeordnet und ausgebildet ist, den Glasrohling (2) vertikal über den Prozessaussparungen (12) zu halten,
- eine Umformvorrichtung (13) mit zwei oder mehr Umformeinheiten (16), die jeweils ein oberes Umformelement (18) und ein unteres Umformelement (20) aufweisen, die jeweils eine Kavität (22) zum Umformen des Glasrohlings (2) ausbilden,
- wobei die Transporteinheit (4) derart an der Umformvorrichtung (13) anordenbar ist, dass die Umformeinheiten (16) jeweils durch eine der Prozessaussparungen (12) hindurchbewegbar sind, um einen von der Gitterstruktur (6) gehaltenen Glasrohling (2) in den Kavitäten (22) zu verpressen.

2. Glasformsystem (1) nach Anspruch 1, wobei die Gitterstruktur (6) durch Gitterstreben (10) und/oder durch einen Draht ausgebildet wird.

3. Glasformsystem (1) nach einem der vorherigen Ansprüche, wobei die Gitterstruktur (6) mindestens ein Auflageelement (30) aufweist, sodass ein Glasrohling (2) auf dem mindestens einen Auflageelement (30) abstützbar ist.

4. Glasformsystem (1) nach einem der vorherigen Ansprüche, wobei die Umformvorrichtung (13) einen die zwei oder mehr Umformeinheiten (16) jeweils umgebenden Vertiefungsbereich (34) aufweist und die Gitterstruktur (6) zumindest abschnittsweise derart in dem Vertiefungsbereich (34) versenkbar ist, dass die Kavitäten (22) vollständig schließbar sind.

5. Glasformsystem (1) nach einem der vorherigen Ansprüche, wobei die unteren Umformelemente (20) einen unteren pyramidenstumpfförmigen Abschnitt (42) und/oder die oberen Umformelemente (18) einen oberen pyramidenstumpfförmigen Abschnitt aufweisen, sodass einen Glasfluss beeinflussende Glasflusshohlräume benachbart zu den Kavitäten (22) bei einem Schließen der Kavitäten (22) ausgebildet werden.

6. Glasformsystem (1) nach dem vorherigen Anspruch 5, wobei zwischen den oberen pyramidenstumpfförmigen Abschnitten ein konvex ausgebildetes Glasflusselement (46) angeordnet ist, das bei dem Schließen der Kavitäten (22) in einen Glasflusshohlraum hineinragt.

7. Glasformsystem (1) nach einem der vorherigen Ansprüche, wobei die unteren Umformelemente (20) jeweils einen unteren quaderförmigen Abschnitt (44) aufweisen und die quaderförmigen Abschnitte eine Seite des Vertiefungsbereichs ausbilden.

8. Glasformsystem (1) nach einem der vorherigen Ansprüche, umfassend zwei oder mehr Positionierungselemente (32) zur Positionierung des Glasrohlings (2) in einer vorbestimmten Position an der Gitterstruktur (6).

9. Glasformsystem (1) nach einem der vorherigen Ansprüche, umfassend ein die Transporteinheit (4) relativ zu der Umformvorrichtung (13) zentrierendes Zentrierungsmittel.

10. Glasformsystem (1) nach einem der vorherigen Ansprüche, wobei der Vertiefungsbereich (34) das Zentrierungsmittel aufweist und das Zentrierungsmittel ausgebildet ist, die Transporteinheit (4) mittels eines Positionierungsabschnitts zu positionieren.

11. Glasformsystem (1) nach einem der vorherigen Ansprüche, wobei die Transporteinheit (4) einen die Gitterstruktur (6) umgebenden Kragen aufweist.

12. Glasformsystem (1) nach einem der vorherigen Ansprüche, wobei die Gitterstruktur (6) ein Kühlsystem aufweist, das angeordnet und ausgebildet ist, die Gitterstruktur (6) zu kühlen.

13. Glasformsystem (1) nach einem der vorherigen Ansprüche, wobei das Kühlsystem innerhalb von Gitterstreben der Gitterstruktur (6) eingebettete Kühlkanäle (40) umfasst, die von einem Kühlfluid durchströmbar sind.

14. Transporteinheit (4) zur Verwendung in einem Glasformsystem (1) nach einem der vorherigen Ansprüche 1-13, die zum Transportieren eines Glasrohlings (2) ausgebildet ist, umfassend
- eine Gitterstruktur (6) mit zwei oder mehr Prozessaussparungen (12),
- wobei die Gitterstruktur (6) angeordnet und ausgebildet ist, den Glasrohling (2) vertikal über den Prozessaussparungen (12) zu halten.

15. Verfahren zur Herstellung von zwei oder mehr Glasprodukten aus einem Glasrohling (2), insbesondere mit einem Glasformsystem (1) nach einem der vorherigen Ansprüche 1-13, umfassend die Schritte:
- Erwärmen eines vertikal über Prozessaussparungen (12) einer Gitterstruktur (6) einer Transporteinheit (4) gehaltenen Glasrohlings (2) mittels einer Heizeinheit;
- Bewegen der Transporteinheit (4) von der Heizeinheit zu einer Umformvorrichtung (13) mit zwei oder mehr Umformeinheiten (16), die jeweils ein oberes Umformelement und ein unteres Umformelement aufweisen, die jeweils eine Kavität zum Umformen des Glasrohlings (2) ausbilden; und
- Bewegen der oberen Umformelemente (18) und/oder der unteren Umformelemente (20) durch die Prozessaussparungen (12) aufeinander zu, um den von der Gitterstruktur (6) gehaltenen Glasrohling (2) in den Kavitäten (22) zu verpressen.

## Claims

1. Glass molding system (1) for producing two or more glass products from a glass blank (2), comprising
- a transport unit (4) for transporting the glass blank (2), which has a grid structure (6) with two or more process recesses (12), the grid structure (6) being arranged and configured to hold the glass blank (2) vertically above the process recesses (12),
- a forming device (13) having two or more forming units (16), each of which has an upper forming element (18) and a lower forming element (20), each of which forms a cavity (22) for forming the glass blank (2),
- wherein the transport unit (4) can be arranged on the forming device (13) in such a way that the forming units (16) can each be moved through one of the process recesses (12) in order to press a glass blank (2) held by the grid structure (6) in the cavities (22).

2. Glass molding system (1) according to claim 1, wherein the grid structure (6) is configured by grid struts (10) and/or by a wire.

3. Glass molding system (1) according to any one of the preceding claims, wherein the grid structure (6) has at least one support element (30), so that a glass blank (2) can be supported on the at least one support element (30).

4. Glass molding system (1) according to any one of the preceding claims, wherein the forming device (13) has a recessed region (34) surrounding the two or more forming units (16) in each case and the grid structure (6) can be lowered at least in sections into the recessed region (34) in such a way that the cavities (22) can be completely closed.

5. Glass molding system (1) according to any one of the preceding claims, wherein the lower forming elements (20) have a lower truncated pyramid-shaped section (42) and/or the upper forming elements (18) have an upper truncated pyramid-shaped section, so that glass flow cavities influencing a glass flow are configured adjacent to the cavities (22) when the cavities (22) are closed.

6. Glass molding system (1) according to any one of the preceding claims 5, wherein a convexly configured glass flow element (46) is arranged between the upper truncated pyramid-shaped sections, which glass flow element projects into a glass flow cavity when the cavities (22) are closed.

7. Glass molding system (1) according to any one of the preceding claims, wherein the lower forming elements (20) each have a lower cuboid section (44) and the cuboid sections form one side of the cavity region.

8. Glass molding system (1) according to any one of the preceding claims, comprising two or more positioning elements (32) for positioning the glass blank (2) in a predetermined position on the grid structure (6).

9. Glass molding system (1) according to any one of the preceding claims, comprising a centering means centering the transport unit (4) relative to the forming device (13).

10. Glass molding system (1) according to any one of the preceding claims, wherein the recess region (34) comprises the centering means and the centering means is configured to position the transport unit (4) by means of a positioning section.

11. Glass molding system (1) according to any one of the preceding claims, wherein the transport unit (4) comprises a collar surrounding the grid structure (6).

12. Glass molding system (1) according to any one of the preceding claims, wherein the grid structure (6) comprises a cooling system arranged and configured to cool the grid structure (6).

13. Glass molding system (1) according to any one of the preceding claims, wherein the cooling system comprises cooling channels (40) embedded within grid struts of the grid structure (6) through which a cooling fluid can flow.

14. Transport unit (4) for use in a glass molding system (1) according to any one of the preceding claims 1-13, which is configured for transporting a glass blank (2), comprising
- a grid structure (6) having two or more process recesses (12),
- wherein the grid structure (6) being arranged and configured to hold the glass blank (2) vertically above the process recesses (12).

15. Method for producing two or more glass products from a glass blank (2), in particular with a glass molding system (1) according to any one of the preceding claims 1-13, comprising the steps of:
- heating a glass blank (2) held vertically above process recesses (12) of a grid structure (6) of a transport unit (4) by means of a heating unit;
- moving the transport unit (4) from the heating unit to a forming device (13) having two or more forming units (16), each having an upper forming element and a lower forming element, each forming a cavity for forming the glass blank (2); and
- moving the upper forming elements (18) and/or the lower forming elements (20) towards each other through the process recesses (12) in order to press the glass blank (2) held by the grid structure (6) in the cavities (22).

## Revendications

1. Système de moulage du verre (1) pour produire deux produits en verre ou plus à partir d'une ébauche de verre (2), comprenant
- une unité de transport (4) pour transporter l'ébauche de verre (2), qui a une structure de grille (6) avec deux ou plusieurs évidements de traitement (12), la structure de grille (6) étant disposée et configurée pour maintenir l'ébauche de verre (2) verticalement au-dessus des évidements de traitement (12),
- un dispositif de formage (13) comportant deux ou plusieurs unités de formage (16), chacune ayant un élément de formage supérieur (18) et un élément de formage inférieur (20), chacun formant une cavité (22) pour le formage du flan de verre (2),
- l'unité de transport (4) peut être disposée sur le dispositif de formage (13) de manière à ce que les unités de formage (16) puissent chacune être déplacées à travers l'un des évidements de traitement (12) afin de presser une ébauche de verre (2) maintenue par la structure de grille (6) dans les cavités (22).

2. Système de moulage de verre (1) selon la revendication 1, dans lequel la structure de grille (6) est configurée par des montants de grille (10) et/ou par un fil.

3. Système de moulage de verre (1) selon l'une quelconque des revendications précédentes, dans lequel la structure de grille (6) comporte au moins un élément de support (30), de sorte qu'une ébauche de verre (2) peut être soutenue sur au moins un élément de support (30).

4. Système de moulage du verre (1) selon l'une quelconque des revendications précédentes, dans lequel le dispositif de formage (13) présente une région en retrait (34) entourant les deux unités de formage (16) ou plus dans chaque cas et la structure de grille (6) peut être abaissée au moins en partie dans la région en retrait (34) de manière à ce que les cavités (22) puissent être complètement fermées.

5. Système de moulage de verre (1) selon l'une quelconque des revendications précédentes, dans lequel les éléments de formage inférieurs (20) ont une section pyramidale tronquée inférieure (42) et/ou les éléments de formage supérieurs (18) ont une section pyramidale tronquée supérieure, de sorte que les cavités de flux de verre influençant un flux de verre sont configurées à côté des cavités (22) lorsque les cavités (22) sont fermées.

6. Système de moulage de verre (1) selon l'une quelconque des revendications précédentes 5, dans lequel un élément d'écoulement de verre (46) à configuration convexe est disposé entre les sections pyramidales tronquées supérieures, cet élément d'écoulement de verre faisant saillie dans une cavité d'écoulement de verre lorsque les cavités (22) sont fermées.

7. Système de moulage du verre (1) selon l'une quelconque des revendications précédentes, dans lequel les éléments de formage inférieurs (20) ont chacun une section cubique inférieure (44) et les sections cubiques forment un côté de la région de la cavité.

8. Système de moulage du verre (1) selon l'une quelconque des revendications précédentes, comprenant deux éléments de positionnement (32) ou plus pour positionner l'ébauche de verre (2) dans une position prédéterminée sur la structure de grille (6).

9. Système de moulage du verre (1) selon l'une quelconque des revendications précédentes, comprenant un moyen de centrage centrant l'unité de transport (4) par rapport au dispositif de formage (13).

10. Système de moulage du verre (1) selon l'une quelconque des revendications précédentes, dans lequel la zone de renfoncement (34) comprend le moyen de centrage et le moyen de centrage est configuré pour positionner l'unité de transport (4) au moyen d'une section de positionnement.

11. Système de moulage de verre (1) selon l'une quelconque des revendications précédentes, dans lequel l'unité de transport (4) comprend un collier entourant la structure de grille (6).

12. Système de moulage de verre (1) selon l'une quelconque des revendications précédentes, dans lequel la structure de grille (6) comprend un système de refroidissement agencé et configuré pour refroidir la structure de grille (6).

13. Système de moulage du verre (1) selon l'une quelconque des revendications précédentes, dans lequel le système de refroidissement comprend des canaux de refroidissement (40) encastrés dans les montants de la structure de grille (6) à travers lesquels un fluide de refroidissement peut circuler.

14. Unité de transport (4) utilisée dans un système de moulage de verre (1) selon l'une quelconque des revendications précédentes 1-13, qui est configurée pour transporter une ébauche de verre (2), comprenant
- une structure de grille (6) comportant deux ou plusieurs évidements de traitement (12),
- la structure de la grille (6) étant disposée et configurée pour maintenir le flan de verre (2) verticalement au-dessus des évidements de traitement (12).

15. Procédé de fabrication de deux ou plusieurs produits en verre à partir d'une ébauche de verre (2), en particulier avec un système de moulage de verre (1) selon l'une quelconque des revendications précédentes 1-13, comprenant les étapes de :
- chauffer une ébauche de verre (2) maintenue verticalement au-dessus des évidements de traitement (12) d'une structure de grille (6) d'une unité de transport (4) au moyen d'une unité de chauffage ;
- déplacer l'unité de transport (4) de l'unité de chauffage vers un dispositif de formage (13) comportant deux unités de formage (16) ou plus, chacune comportant un élément de formage supérieur et un élément de formage inférieur, chacun formant une cavité pour le formage du flan de verre (2) ; et
- déplacer les éléments de formage supérieurs (18) et/ou les éléments de formage inférieurs (20) l'un vers l'autre à travers les évidements de traitement (12) afin de presser l'ébauche de verre (2) maintenue par la structure de grille (6) dans les cavités (22).
